# EUROPEAN PATENT APPLICATION

(11) **EP 2 843 803 A1**
(43) Date of publication of application: **04.03.2015**
(21) Application number: 13182844.4
(22) Date of filing: 03.09.2013
(51) Int. Cl.: H02K 1/27

(54) **Integrated damping for magnets on permanent magnet generators**

(71) Applicant: Siemens Aktiengesellschaft, 80333 München (DE)
(72) Inventor: Andersen, Kim Folmer, 8700 Horsens (DK); Lemma, Edom, 7330 Brande (DK)

(57) **Abstract**

It is described a magnet module (100) and a method for manufacturing of a magnet module (100) for a generator with an external rotor, the magnet module (100) comprising a magnetic element (110), a base plate element (120), and a vibration damping element (130). The magnetic element (110) is located above the base plate element (120) and the vibration damping element (130) is located on top of the base plate element (120), thus defining a layer plane (140) between the magnetic element (110) and the base plate element (120), such that the magnetic element (110), the base plate element (120) and the vibration damping element (130) together form a stack (150). The stack (150) comprises a first axis (151), wherein the first axis (151) corresponds to a stacking orientation of the stack (150), and a normal vector (141) of the layer plane (140) corresponding to the first axis (151).

## Description

### Field of invention

The present invention relates to the field of wind turbines, in particular to direct drive wind turbines. In a direct drive wind turbines direct drive generators are used.

### Art Background

Direct drive generators in general emit large amount of low frequency noise in the range from 0-100Hz. This may cause annoyance to neighbours of wind turbines.

On geared turbines the torque arm for the gearbox is often supported with some type of rubber dampers, but on direct drive turbines there are not any features like this. The origin of this noise occurs mainly from the ripple forces between the magnets and the teeth in the stator. On top of that the generator rotor and stator have many resonances within the mentioned frequency range.

There may be a need for decreasing the emitted noise of a direct drive turbine by eliminating or at least reducing these ripple forces.

### Summary of the Invention

This need may be met by the subject matter according to the independent claims. Advantageous embodiments of the present invention are described by the dependent claims.

According to a first aspect of the invention there is provided a magnet module for a generator with an external rotor, the magnet module comprising a magnetic element, a base plate element and a vibration damping element. The magnetic element is located above the base plate element, the vibration damping element is located on top of the base plate element, thus defining a layer plane between the magnetic element and the base plate element, such that the magnetic element, the base plate element and the vibration damping element together form a stack. The stack comprises a first axis, wherein the first axis corresponds to a stacking orientation of the stack, and a normal vector of the layer plane corresponding to the first axis.

A base plate element according to the invention may be any element, which may at least not allow for a significant change of a direction of a flow of the magnetic field provided by the magnetic element. Preferably, the base plate element may be made of laminated steel and/or stainless steel. The lamination orientation is normal to the direction of rotation.

A vibration damping element according to the invention may be any element, which may at least allow for a vibration damping of ripple forces occurring between a magnetic module and the stator. Preferably, the vibration damping element is made of rubber material.

By arranging the vibration damping element between the magnetic element and the base plate element, this arrangement forms a sandwiched magnet module. The vibration damping element may have at least the same dimension in the orientation of the layer plane as the magnetic module. The base plate element may have at least the same dimension in the orientation of the layer plane as the magnetic module.

This aspect of the invention is based on the idea that a damping of the magnetic elements of a direct drive generator may lead to a reduction of ripple forces, at least in the direction of the first axis and therefore lead to less noise of a direct drive generator, which will reduce the emitted noise of a direct drive turbine.

According to a further embodiment of the invention the vibration damping element is fixed between the magnetic element and the base plate element at a first side of the vibration damping element and at a second side of the vibration damping element, wherein the first side of the vibration damping element and the second side of the vibration damping element each is orientated in parallel to the layer plane.

The fixation of the vibration damping element inside the sandwiched magnet module arrangement may be provided in any way that does not allow for a misalignment between the vibration damping element, the magnetic element and the base plate element of the manufacturing magnet module.

This embodiment of the invention is based on the idea that a fixation of the elements of the magnet module among each other may lead to an improved damping of ripple forces in orthogonal direction to the layer plane.

According to a further embodiment of the invention an area of the vibration damping element corresponds to an area of the magnetic element and both areas are orientated in parallel to the layer plane.

Therefore, the vibration damping element may have the same dimension in the orientation of the layer plane as the magnetic module, thus the vibration damping element providing the same base area as the base area of the magnetic element.

This embodiment of the invention is based on the idea that a vibration damping element having the same base area as the magnetic element, may lead to a more optimized damping of ripple forces.

According to a further embodiment of the invention the vibration damping element is arc-shaped when viewed from a viewing side, wherein the viewing side of the vibration damping element is orientated orthogonal to the layer plane.

This embodiment of the invention is based on the idea that an arc-shaped vibration damping element may lead to an improved damping of ripple forces in direction of the layer plane.

According to a further embodiment of the invention the vibration damping element is segmented.

A segmented vibration damping layer according to the invention may be a segmentation of the vibration damping layer along the layer plane.

This embodiment of the invention is based on the idea that a segmented vibration damping element may lead to an even more improved damping of ripple forces as the ripple forces may not be constant all-over the magnet module and therefore, through segmenting the vibration damping element the overall damping of the ripple forces between a magnet module and the stator may be even more accurate.

According to a further embodiment of the invention the magnet module further comprises a further base plate element, wherein the further base plate element is located between the magnetic element and the vibration damping element.

This embodiment of the invention is based on the idea that a conventional manufactured magnet module may be used, by applying a vibration damping element arranged on a base plate element to the base plate element of a conventional magnet module. This may lead to reduction of manufacturing costs.

According to a further embodiment of the invention the vibration damping element is fixed between the base plate element and the further base plate element.

The fixation of the vibration damping element inside the sandwiched magnet module arrangement may be provided in any way that does not allow for a misalignment between the vibration damping element and both the base plate elements of the manufacturing magnet module.

This embodiment of the invention is based on the idea that a fixation of the elements of the magnet module among each other may lead to an improved damping of ripple forces in orthogonal direction to the layer plane.

According to a further embodiment of the invention the base plate element and the further base plate element each comprise a toothed surface, wherein both toothed surfaces engage with each other.

Accordingly, the vibration damping element is rigidly fixed between both toothed surfaces of the base plate element.

This embodiment of the invention is based on the idea that a vibration damping element between two toothed surfaced base plate elements may lead to an even more improved damping of ripple forces in direction of the layer plane.

According to a further embodiment of the invention the vibration damping element is fixed between the magnetic element and the base plate element by use of an adhesive.

This embodiment of the invention is based on the idea that the vibration damping element may be permanently fixed between the magnetic element and the base plate element, thus providing a very stable arrangement against any misalignment, which, moreover may further reduce manufacturing costs of the magnet module.

According to a further embodiment of the invention the magnetic element is a permanent magnetic element.

In particular, the magnetic element comprises a rare earth permanent magnet material.

This embodiment of the invention is based on the idea that no additional energy is required for establishing a high magnetic field that is necessary for the operation of a generator.

According to a further embodiment of the invention the vibration damping element has a minimum thickness and can be varied in its thickness, thus allowing for a thickness adjustment of the magnet module.

For example a casted rubber layer may be used as the vibration damping element. Thereby the casted rubber may be used to adjust the height of the base plate element and the magnetic module by use of an appropriate fixture.

This embodiment of the invention is based on the idea that varying accurately the thickness of a vibration damping element may be simpler than varying accurately the thickness of a magnetic element, therefore allowing for a further reduction of manufacturing costs of a magnet module.

According to a further aspect of the invention there is provided a rotor for a generator with an internal stator, the rotor comprising at least a magnet module according to any of the embodiments of the preceding aspects of the invention.

According to a further aspect of the invention there is provided a generator with an external rotor, the generator comprising at least a magnet module according to any of the embodiments of the preceding aspects of the invention.

According to a further aspect of the invention there is provided a wind turbine, in particular a direct drive wind turbine, with a generator with an external rotor, the wind turbine comprising at least a magnet module according to any of the embodiments of the preceding aspects of the invention.

According to a further aspect of the invention there is provided a method for manufacturing of a magnet module for a generator with an external rotor, the method comprising: Locating a vibration damping element on top of a base plate element, locating a magnetic element over the vibration damping element, thus defining a layer plane between the magnetic element and the base plate element, such that the magnetic element, the base plate element and the vibration damping element together form a stack.

As a conclusion, the proposed invention may lead to direct drive generators with an external rotor, where lower ripple forces may be transferred from the magnet modules to the rotor of the generator by damping of occurring vibrations and thus less noise may be generated when using such direct drive generators. Moreover, the invention discloses an easy way for obtaining less variation in the height of the magnet module subassembly, which may fulfil requests regarding lower tolerances in the production process of direct drive generators.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematical drawing of a proposed magnet module according to an exemplary embodiment of the invention.
Figure 2 shows a schematical three-dimensional drawing of a proposed magnet module according to the exemplary embodiment of figure 1 of the invention.
Figure 3 shows a schematical three-dimensional drawing of a proposed magnet module according to another exemplary embodiment of the invention.
Figure 4 shows a schematical three-dimensional drawing of a proposed magnet module according to another exemplary embodiment of the invention.
Figure 5 shows a schematical side-view drawing of a proposed magnet module according to another exemplary embodiment of the invention.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features, which have already been elucidated with respect to a previously described embodiment are not elucidated again at a later position of the description.

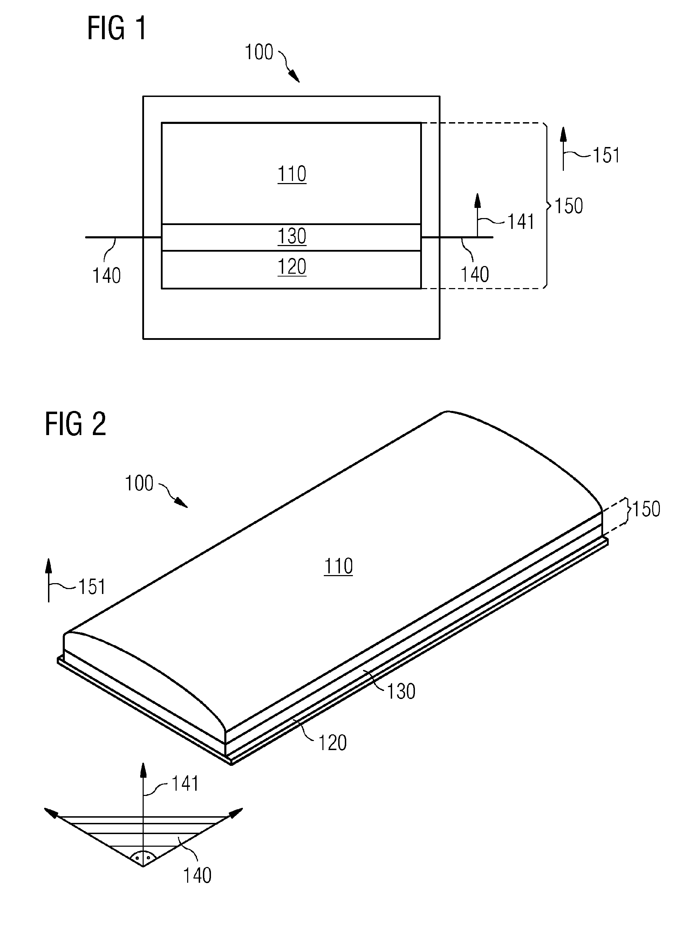

Figure 1 shows a schematical drawing of a proposed magnet module 100 according to an exemplary embodiment of the invention. In figure 1, a magnet module 100 for a generator with an external rotor is shown, wherein the magnet module comprises a magnetic element 110, a base plate element 120, and a vibration damping element 130. The magnetic element 110 is located above the base plate element 120, the vibration damping element 130 is located on top of the base plate element 120, thus defining a layer plane 140 between the magnetic element 110 and the base plate element 120, such that the magnetic element 110, the base plate element 120 and the vibration damping element 130 together form a stack 150. The stack 150 comprises a first axis 151, wherein the first axis 151 corresponds to a stacking orientation of the stack 150, and a normal vector 141 of the layer plane 140 corresponding to the first axis 151.

Figure 2 shows a schematical three-dimensional drawing of a proposed magnet module 100 according to the exemplary embodiment of figure 1 of the invention. In figure 1 a magnet module 100 with a flat rubber layer as a vibration damping element 130 in between is shown. In all the figures 1 to 5, the magnet module 100 is shown without a magnet cover, which in general is used to protect the magnet module 100.

The invention entails using a thin layer of damping rubber material as the vibration damping element 130 underneath the permanent magnets as the magnet modules 100 used in the rotor. This damping material 130 will reduce the transmitted force and hence reduce the vibration acceleration of the surface of the rotor house.

The magnet elements 100 may have a flat or curved surface on the interface to the rotor house and the vibration damping element 130 may be used on this surface. Such a vibration damping element 130, for example a rubber layer, may add an air gap behind the magnet element 100 and may lower the flux in the magnetic circuit. It may be possible to get a rubber material used for manufacturing of the vibration damping element 130 with magnetic properties, as may be known for example from refrigerator magnets. If a rubber layer is used as the vibration damping element 130, the hardness of the rubber and its damping properties may be chosen to give a wanted stiffness. The resonance frequency for the major modes of the magnet mass relative to the stiffness in the major directions though its frequency most likely will be higher than the frequency range mentioned above. Hence the movement of the magnet module 100 during operation will most probably act as a forced vibration. The vibrations higher than the magnet module 100 resonance as a magnet-rubber system resonance may be dampened out even more.

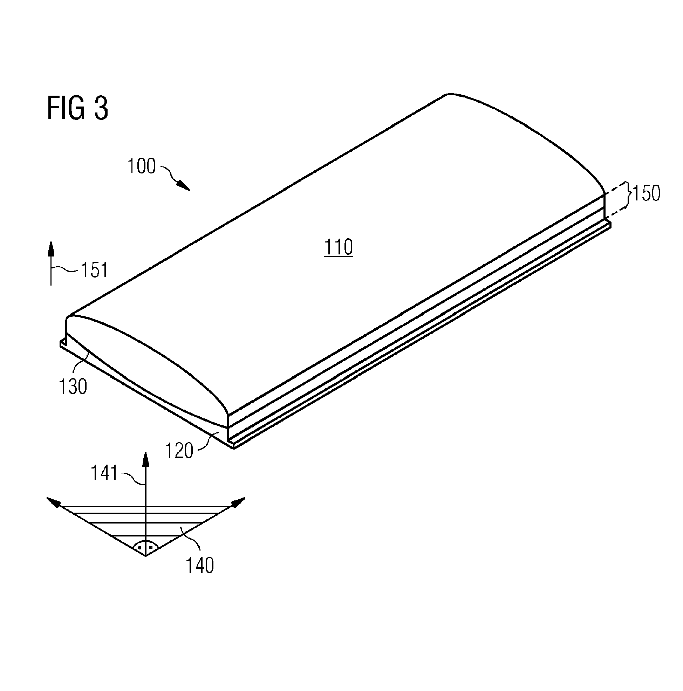

Figure 3 shows a schematical three-dimensional drawing of a proposed magnet module 100 according to another exemplary embodiment of the invention. In contrast to figure 1, the vibration damping element 130 shown in figure 3 is arc-shaped when viewed from a viewing side, wherein the viewing side of the vibration damping element 130 is orientated orthogonal to the layer plane 140.

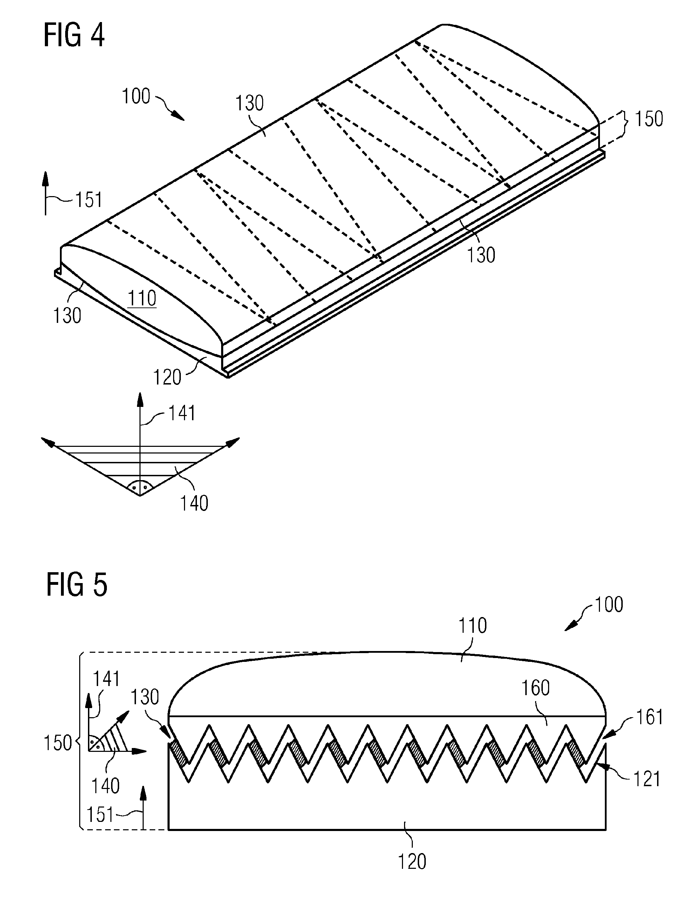

Figure 4 shows a schematical three-dimensional drawing of a proposed magnet module 100 according to another exemplary embodiment of the invention. In contrast to figure 2, the vibration damping element 130 shown in figure 4 is segmented 131. The vibration damping element 130 shown in figure 4 comprises in this example six segments 131, which all are connected to each other by a thin stripe surrounding the segments 131. If the vibration damping element 130 shall be segmented, the vibration damping element 130 may at least comprise two segments.

Figure 5 shows a schematical side-view drawing of a proposed magnet module according to another exemplary embodiment of the invention. In figure 5 the magnet module 100 moreover comprises a further base plate element 160, wherein the further base plate element 160 is located between the magnetic element 110 and the vibration damping element 130. In the shown exemplary embodiment of figure 5 the base plate element 120 and the further base plate element 160 each comprise a toothed surface 121, 161, wherein both toothed surfaces 121, 161 engage with each other. Therefore, the vibration damping element 130 is sinuous shaped, in order to properly fit into place in between the toothed base plate elements 120, 160.

The assembly of the magnet module 100 may be done as a highly automated process. The base plate element 120 may have two edges that fit with slots in the rotor of the generator. On top of the lower part of the base plate element 120 the vibration damping element 130 may be attached using high strength adhesives. The further base plate element 160 and the magnetic element 110 may be assembled and placed on top of the vibration damping element 130 on the below arranged base plate element 120 by using for example the same high strength adhesive. If any cover over the magnet element 100 is needed, it may be mounted and spot welded to the base plate element 120 at this stage. Therefore, the base plate element 120 may comprise a bigger base area than the base area of the magnetic module. If the magnetic element 110 is already magnetized this may excrete a magnetic pressure on the base plate element 102 during the curing and hardening of the glue.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

It is noted that it may also be possible in further refinements of the invention to combine features from different illustrative embodiments described herein. It should also be noted that reference signs in the claims should not be construed as limiting the scope of the claims.

In order to recapitulate the above described embodiments of the present invention one can state:
By providing a vibration damping element between a magnetic element and a base plate element of a magnet module, occurring ripple forces between the magnets and the teeth in the stator may be reduced, resulting in a noise reduction of a direct drive turbine.

## Claims

1. A magnet module (100) for a generator with an external rotor, the magnet module (100) comprising
a magnetic element (110),
a base plate element (120), and
a vibration damping element (130), wherein
the magnetic element (110) is located above the base plate element (120),
the vibration damping element (130) is located on top of the base plate element (120), thus defining a layer plane (140) between the magnetic element (110) and the base plate element (120), such that the magnetic element (110), the base plate element (120) and the vibration damping element (130) together form a stack (150), and wherein
the stack (150) comprises
a first axis (151), wherein the first axis (151) corresponds to a stacking orientation of the stack (150), and
a normal vector (141) of the layer plane (140) corresponding to the first axis (151).

2. The magnet module (100) as set forth in preceding claim 1, wherein
at a first side of the vibration damping element (130) and at a second side of the vibration damping element (130), the vibration damping element (130) is fixed between the magnetic element (110) and the base plate element (120), and wherein
the first side of the vibration damping element (130) and the second side of the vibration damping element (130) each is orientated in parallel to the layer plane (140).

3. The magnet module (100) as set forth in preceding claim 1 or 2, wherein
an area of the vibration damping element (130) corresponds to an area of the magnetic element (110), and wherein
both areas are orientated in parallel to the layer plane (140).

4. The magnet module (100) as set forth in any of the preceding claims, wherein
the vibration damping element (130) is arc-shaped when viewed from a viewing side, wherein the viewing side of the vibration damping element (130) is orientated orthogonal to the layer plane (140).

5. The magnet module (100) as set forth in any of the preceding claims, wherein
the vibration damping element (130) is segmented (131).

6. The magnet module (100) as set forth in any of the preceding claims, further comprising
a further base plate element (160), wherein the further base plate element (160) is located between the magnetic element (110) and the vibration damping element (130).

7. The magnet module (100) as set forth in preceding claim 6, wherein
the vibration damping element (130) is fixed between the base plate element (120) and the further base plate element (160).

8. The magnet module (100) as set forth in preceding claim 7, wherein
the base plate element (120) and the further base plate element (160) each comprise a toothed surface (121, 161), and wherein
both toothed surfaces (121, 161) engage with each other.

9. The magnet module (100) as set forth in any of the preceding claims, wherein
the vibration damping element (130) is fixed between the magnetic element (110) and the base plate element (120) by use of an adhesive.

10. The magnet module (100) as set forth in any of the preceding claims, wherein
the magnetic element (110) is a permanent magnetic element.

11. The magnet module (100) as set forth in any of the preceding claims, wherein
the vibration damping element (130) has a minimum thickness and can be varied in its thickness, thus allowing for a thickness adjustment of the magnet module (100).

12. A rotor for a generator with an internal stator, the rotor comprising
at least a magnet module (100) according to any of the claims 1 to 11.

13. A generator with an external rotor, the generator comprising
at least a magnet module (100) according to any of the claims 1 to 11.

14. A wind turbine, in particular a direct drive wind turbine, with a generator with an external rotor, the wind turbine comprising
at least a magnet module (100) according to any of the claims 1 to 11.

15. A method for manufacturing of a magnet module (100) for a generator with an external rotor, the method comprising:
locating a vibration damping element (130) on top of a base plate element (120),
locating a magnetic element (110) over the vibration damping element (130), thus defining a layer plane (140) between the magnetic element (110) and
the base plate element (120), such that the magnetic element (110), the base plate element (120) and the vibration damping element (130) together form a stack (150).
